# FASCICULE DE BREVET EUROPEEN

(11) **EP 0 487 365 B1**
(45) Date de publication et mention de la délivrance du brevet: **14.12.1994**
(21) Numéro de dépôt: 91402817.0
(22) Date de dépôt: 22.10.1991
(51) Int. Cl.: H01R 4/34

(54) **Cale de positionnement bloqué pour une cosse de connexion électrique**
Positionierungskeil zum Blockieren eines elektrischen Kabelschuhes
Positioning wedge for blocking of an electric cable terminal

(30) Priorité: 22.11.1990 FR 9014580
(43) Date de publication de la demande: 27.05.1992
(73) Titulaire: RAPID S.A., F-75017 Paris (FR)
(72) Inventeur: Leon, Jean Pierre, F-78000 Houilles (FR)
(74) Mandataire: Durand, Yves Armand Louis

(56) Documents cités:
- DE-A- 3 830 030
- DE-B- 1 096 443
- FR-E- 55 296

## Description

La présente invention a essentiellement pour objet une cale de positionnement bloqué pour une pièce, telle que par exemple une cosse de connexion électrique.

Il est connu depuis longtemps de fixer des cosses entre un écrou et une tête de vis, ces cosses permettant la connexion électrique, par l'intermédiaire d'un fil électriquement conducteur, entre deux éléments quelconques.

Toutefois, la fixation des cosses pose des problèmes. En effet, la cosse tourne lors du serrage de la vis, ce qui peut endommager le conducteur ou même rompre celui-ci et donc le séparer de la cosse. En outre, toujours en raison du serrage, il est impossible ou très difficile de positionner la cosse suivant une orientation angulaire déterminée, ce qui est utile, sinon indispensable pour relier électriquement deux éléments positionnés dans l'espace d'une façon particulière.

Aussi, la présente invention a essentiellement pour but de résoudre ces problèmes.

A cet effet, l'invention a pour objet une cale de positionnement bloqué pour une pièce, telle que par exemple une cosse de connexion électrique, à fixer entre un écrou et une tête de vis, caractérisée en ce qu'elle comprend une embase qui d'une part est pourvue d'un perçage de forme adaptée à la forme, par exemple polygonale, de l'écrou pour que la cale, une fois montée sur l'écrou, soit immobilisée en rotation par rapport à celui-ci, et qui, d'autre part comporte sur au moins l'une de ses faces et sur le pourtour du perçage des dents en saillie de ladite face et en ce que le nombre de dents, par exemple égal à quatre, définit entre ces dents autant de créneaux correspondant à autant de positions angulaires pour la pièce ou cosse précitée pour permettre le pré-positionnement angulaire de la pièce ou cosse entre les dents ainsi que son immobilisation en rotation pendant le serrage de la vis.

Selon encore une autre caractéristique de la cale selon cette invention, au moins l'une des deux faces en vis-à-vis de respectivement deux dents adjacentes est biseautée pour faciliter le positionnement de la pièce ou cosse précitée sur la cale.

Suivant un mode de réalisation, chaque dent présente sensiblement la forme d'un triangle rectangle dont l'hypoténuse constitue la face biseautée précitée.

La cale de cette invention, suivant une réalisation spécifique, est caractérisée en ce que l'embase est sensiblement carrée et comporte quatre dents aux quatre angles du carré qui peuvent être chanfreinés, le perçage dans l'embase étant lui aussi carré.

Mais d'autres caractéristiques et avantages de l'invention apparaîtront mieux dans la description détaillée qui suit et se réfère aux dessins annexés, donnés uniquement à titre d'exemple, et dans lesquels.

La figure 1 est une vue en perspective éclatée ou avant montage, d'un assemblage constitué par une vis et une cosse à fixer sur un écrou par l'intermédiaire d'une cale selon cette invention.

La figure 2 est une vue en position montée de cet assemblage.

En se reportant aux figures, on voit une vis 1 avec tête 2 permettant le montage ou la fixation d'une cosse de connexion électrique 3 par son orifice 3a sur un écrou 4 solidaire, par soudage par exemple, d'une pièce quelconque 5, tel que par exemple le châssis d'un véhicule automobile, et cela par l'intermédiaire d'une cale 6 permettant un pré-positionnement angulaire de la cosse 3 et son blocage en rotation lors du serrage de la vis 2 sur l'écrou 4.

Conformément à l'invention, la cale 6 comprend une embase 7 pourvue d'un perçage 8 présentant une forme adaptée à la forme par exemple polygonale de l'écrou 4.

Suivant l'exemple de réalisation représenté, le perçage 8 présente une forme sensiblement carrée correspondant à celle de l'écrou 4 de sorte que la cale 6 une fois montée sur l'écrou 4, sera immobilisée en rotation par rapport à celui-ci. Bien entendu, le perçage 8 pourrait présenter toute autre forme polygonale sans sortir du cadre de l'invention, cela étant fonction de la forme de la périphérie de l'écrou 4.

L'embase 7 comporte sur une face une pluralité de dents 9 faisant saillie de ladite face.

Le nombre de ces dents est ici égal à quatre, mais leur nombre peut être inférieur ou supérieur à quatre, cela étant fonction du nombre de positions d'orientation angulaire que l'on souhaite pour la cosse 3, étant entendu que le nombre de dents définira entre ces dents autant de créneaux 9a que de positions angulaires pour la cosse 3. Comme on le voit clairement sur les figures, chaque dent 9 comporte deux faces 10,11 susceptibles de venir en contact avec le bord de la cosse 3. Plus précisément, l'une 10 des deux faces 10,11 en vis-à-vis de respectivement deux dents adjacentes 9 est biseautée pour faciliter l'insertion et le positionnement de la cosse 3 entre deux dents 9.

Suivant la réalisation représentée, chaque dent 9 présente sensiblement la forme d'un triangle rectangle dont l'hypoténuse constitue précisément la face biseautée 10, laquelle face peut, comme représenté, ne pas être plane, mais être légèrement incurvée pour faciliter la mise en place de la cosse 3 dans un créneau 9a entre deux dents adjacentes 9.

L'embase 7 peut présenter, comme on le voit sur les figures, une forme sensiblement carrée et comporter quatre dents 9 aux quatre coins ou angles du carré qui peuvent être chanfreinés comme on le voit en 12. Mais, là encore, comme pour la forme du perçage 8 dans l'embase, la forme extérieure de ladite embase peut être quelconque en fonction des besoins.

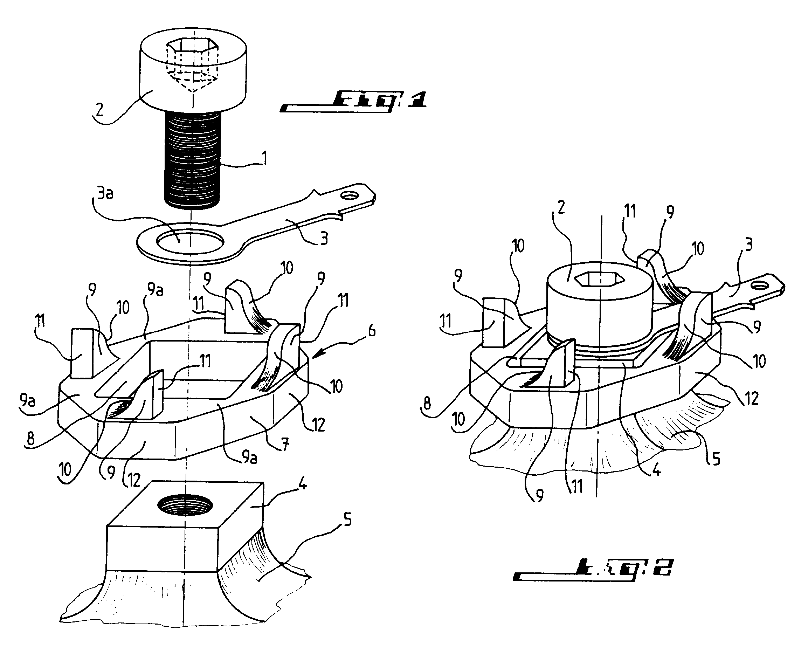

Pour effectuer le montage de la cosse 3 et comme on le voit mieux sur la figure 2, on procède de la façon suivante.

La cale 6 est chaussée par son perçage ou son ouverture 8 sur l'écrou 4.

Ensuite on positionne la cosse 3 dans un créneau 9a entre deux dents adjacentes 9, et ce, selon l'orientation voulue pour ladite cosse, l'insertion de celle-ci étant facilitée par la partie biseautée 10 des dents 9 comme expliqué précédemment.

Ensuite, on serre la partie avec orifice 3a de la cosse 3 sur l'écrou 4 au moyen de la vis 1, 2, et on comprend que la cosse, grâce aux dents 9 sera bloquée en rotation lors du serrage, et cela dans la position angulaire choisie.

Bien entendu, l'invention n'est nullement limitée au mode de réalisation de cale décrit et illustré qui n'a été donné qu'à titre d'exemple.

C'est ainsi que le nombre et la forme des dents faisant saillie de l'une des faces de la cale peuvent être quelconques, de même que la forme du perçage dans la cale, en fonction de la forme de l'écrou. Egalement, la cale de cette invention pourra être réalisée en toute matière appropriée quelconque, et telle que par exemple une matière synthétique, les dents venant de moulage avec l'embase 7 de ladite cale.

C'est dire que l'invention comprend tous les équivalents techniques des moyens décrits ainsi que leurs combinaisons si celles-ci sont effectuées suivant son esprit.

## Revendications

1. Cale de positionnement bloqué pour une pièce, telle que par exemple une cosse de connexion électrique (3), à fixer entre un écrou (4) et une tête (2) de vis (1), caractérisée en ce qu'elle comprend une embase (7) qui d'une part est pourvue d'un perçage (8) de forme adaptée à la forme, par exemple polygonale, de l'écrou (4) pour que la cale (6), une fois montée sur l'écrou, soit immobilisée en rotation par rapport à celui-ci, et qui, d'autre part comporte sur au moins l'une de ses faces et sur le pourtour du perçage (8) des dents (9) en saillie de ladite face, et en ce que le nombre de dents (9), par exemple égal à quatre, définit entre ces dents autant de créneaux (9a) correspondant à autant de positions angulaires pour la pièce ou cosse précitée (3) pour ainsi permettre le pré-positionnement angulaire de ladite pièce ou cosse entre les dents (9) ainsi que son immobilisation en rotation pendant le serrage de la vis (1).

2. Cale selon la revendication 1, caractérisée en ce qu'au moins l'une (10) des deux faces en vis-à-vis (10, 11) de respectivement deux dents adjacentes (9) est biseautée pour faciliter le positionnement de la pièce ou cosse précitée (3) sur la cale (6).

3. Cale selon la revendication 1 ou 2, caractérisée en ce que chaque dent (9) présente sensiblement la forme d'un triangle rectangle dont l'hypoténuse constitue la face biseautée précitée (10).

4. Cale selon l'une des revendications 1 à 3, caractérisée en ce que l'embase est sensiblement carrée et comporte quatre dents (9) aux quatre angles (12) du carré qui peuvent être chanfreinés, le perçage (8) dans l'embase (7) étant lui aussi carré.

## Patentansprüche

1. Blockierter Positionierungskeil für ein Werkstück, wie z.B einen zwischen einer Mutter (4) und eines Kopfes (2) einer Schraube (1) zu befestigenden elektrischen Anschlußschuh (3), dadurch gekennzeichnet, dass er ein Unterlegstück (7) aufweist, dass einerseits mit einer Bohrung (8) versehen ist, deren Gestalt an die z.B. vieleckige Gestalt der Mutter (4) angepasst ist, damit der Keil (6), ist er einmal an der Mutter angeordnet worden, gegen Drehung in bezug auf dieselbe festgehalten wird und das andererseits an wenigstens einer seiner Flächen und an dem Umfang der Bohrung (8) von der besagten Fläche vorspringende Zähne (9) aufweist, und dass die z.B. vier betragende Anzahl von Zähnen (9) zwischen diesen Zähnen soviele Lücken (9a) begrenzen, die ebensovielen Winkelstellungen für das vorgenannte Werkstück bzw. Schuhstück (3) entsprechen, um somit das winkelmässige Voreinstellen des besagten Werkstückes bzw. Schuhstückes zwischen den Zähnen (9) sowie sein Festhalten gegen Drehung während des Anziehens der Schraube (1) zu gestatten.

2. Keil nach Anspruch 1, dadurch gekennzeichnet, dass wenigstens die eine (10) der beiden einander gegenüberliegenden Flächen (10, 11) jeweils von zwei benachbarten Zähnen (9) abgeschrägt ist, um das Positionieren des vorgenannten Werkstückes bzw. Schuhstückes (3) an dem Keil (6) zu erleichtern.

3. Keil nach Anspruch 1 oder 2, dadurch gekennzeichnet, dass jeder Zahn (9) etwa die Gestalt eines rechtwinkligen Dreiecks aufweist, dessen Hypotenuse die vorgenannte abgeschrägte Fläche (10) bildet.

4. Keil nach einem der Ansprüche 1 bis 3, dadurch gekennzeichnet, dass das Unterlegstück etwa quadratisch ist und vier Zähne (9) an den vier Winkeln (12) des Quadrates aufweist, die abgefast sein können, wobei die Bohrung (8) in dem Unterlegstück (7) selber auch quadratisch ist.

## Claims

1. Wedge for the blocked positioning for a part such for example as an electrical connection terminal lug (3) to be fastened between a nut (4) and a head (2) of a screw (1), characterized in that it comprises a base (7) which on the one hand is provided with a bore (8) of a shape matched to the for example polygonal shape of the nut (4) in order that the wedge (6) once mounted onto the nut, be held against rotation with respect thereto and which on the other hand comprises on at least one of its faces and on the periphery of the bore (8) teeth (9) projecting from the said face and in that the number of teeth (9) for example equal to four defines between these teeth as many crenels (9a) corresponding to as many angular positions for the aforesaid part or terminal lug (3) thereby to permit the angular prepositioning of the said part or terminal lug between the teeth (9) as well as its holding against rotation during the tightening of the screw (1).

2. Wedge according to claim 1, characterized in that at least one (10) of the two confronting faces (10, 11) of two adjacent teeth (9), respectively, is bevelled for facilitating the positioning of the aforesaid part or terminal lug (3) onto the wedge (6).

3. Wedge according to claim 1 or 2, characterized in that each tooth (9) exhibits substantially the shape of a right-angled triangle the hypotenuse of which constitutes the aforesaid bevelled face (10).

4. Wedge according to one of claims 1 to 3, characterized in that the base is substantially square and comprises four teeth (9) at the four corners (12) of the square which may be chamfered, the bore (8) in the base (7) being itself square too.
